# EUROPEAN PATENT APPLICATION

(11) **EP 3 220 311 A1**
(43) Date of publication of application: **20.09.2017**
(21) Application number: 17160916.7
(22) Date of filing: 14.03.2017
(51) Int. Cl.: G06K 9/00

(54) **INVESTIGATING THE VALIDITY OF IDENTITY DOCUMENTS**

(30) Priority: 16.03.2016 GB 201604475
(71) Applicant: IDscan Biometrics Limited, London E14 9QD (GB)
(72) Inventor: Abdullah, M-Hazem, Yenisehir Mersin (TR)
(74) Representative: Armstrong, Rosemary

(57) **Abstract**

A method of investigating the validity of an identity document comprising acquiring at least one image containing the identity document, analysing the image to detect a machine readable zone of the identity document, processing the machine readable zone to extract information therefrom, analysing the image to detect a location of the identity document in the image and then detect a visual inspection zone of the identity document, processing the visual inspection zone to extract information therefrom, determining matching between at least some of the machine readable zone information and at least some of the visual inspection zone information to produce a match result, and determining a validity score for the identity document using the match result.

## Description

### Field of the Invention

The invention relates to investigating the validity of identity documents and particularly the validity of identity documents compliant with the International Civil Aviation Organization (ICAO) 9303 standard, such as passports and visas.

### Background to the Invention

Conventional identity document validity solutions follow a structured document analysis approach where each specific identity document is well-defined in the system, with information about the location and format of all elements of the document, and the stored information used in an assessment of the validity of a query document. Although this approach provides accurate document information analysis capabilities, it has the shortcoming of the need to define every specific element of every candidate identity document. This presents problems to the user of the system, for example, when new issues of any of the identity documents are published, they will not be supported unless the system is updated with information about them. It is desirable to be able to analyse an identity document on first encountering the document and to be able to investigate the validity of the identity document. Once the validity has been investigated, it is also desirable to use information in the identity document.

### Summary of the Invention

According to as first aspect of the invention there is provided a method of investigating the validity of an identity document comprising
(i) acquiring at least one image containing the identity document,
(ii) analysing the image to detect a machine readable zone of the identity document,
(iii) processing the machine readable zone to extract information therefrom,
(iv) analysing the image to detect a location of the identity document in the image and then detecting a visual inspection zone of the identity document,
(v) processing the visual inspection zone to extract information therefrom,
(vi) determining matching between at least some of the machine readable zone information and at least some of the visual inspection zone information to produce a match result, and
(vii) determining a validity score for the identity document using the match result.

Acquiring the at least one image containing the identity document may comprise acquiring one or more static images containing the identity document. Acquiring the at least one image containing the identity document may comprise acquiring a video of the identity document. Acquiring the at least one image containing the identity document may comprise acquiring images at different angles of the identity document and/or different orientations of the identity document. Acquiring the at least one image containing the identity document may comprise acquiring images under different light conditions. Acquiring the at least one image containing the identity document may comprise using a camera, such as a mobile phone camera or a webcam, or using a scanner. Acquiring the at least one image containing the identity document may comprise acquiring an image containing a page of the identity document. Acquiring the at least one image containing the page of the identity document may comprise acquiring an image containing a first side of the page of the identity document and acquiring an image containing a second side of the page of the identity document.

Analysing the image to detect the machine readable zone (MRZ) of the identity document may comprise detecting a line of the MRZ by searching the image for at least one MRZ filler character. Analysing the image to detect the MRZ of the image may comprise detecting one or more further lines of the MRZ by searching the image around the first line of the MRZ for at least one MRZ filler character. Searching the image for at least one MRZ filler character may comprise searching for a plurality of sequential MRZ filler characters, for example at least three sequential MRZ filler characters. Searching the image for at least one MRZ filler character may comprise using template matching to detect the MRZ filler character.

Analysing the image to detect the MRZ of the identity document may comprise using detection of the one or more lines of the MRZ to determine a type of the identity document. Analysing the image to detect the MRZ of the identity document may comprise using detection of the one or more lines of the MRZ to determine a height of the MRZ. Analysing the image to detect the MRZ of the identity document may comprise using detection of the one or more lines of the MRZ to determine a width of the MRZ. Analysing the image to detect the MRZ of the identity document may comprise using detection of the one or more lines of the MRZ to determine an orientation of the identity document. This may be used to reorient the identity document if necessary.

Identity documents which are compliant with the ICAO 9303 standard comprise a MRZ, which is usually at the bottom of a page of the document comprising identity information. The MRZ may comprise different numbers of lines, depending on the type of the document. For example, a passport compliant with the ICAO 9303 standard will comprise a MRZ having 2 lines and some identification cards compliant with the ICAO 9303 standard will comprise a MRZ having 3 lines. The MRZs comprise machine readable information contained in lines of text capable of optical character recognition (OCR). Each line comprises a number of characters, depending on the type of document, representing information such as document type, country code, primary and secondary identifiers (names), identity document number, nationality, date of birth, sex, date of expiry and check digits. The information is spaced with one or more filler characters, such as <.

Processing the MRZ to extract information therefrom may comprise reading text from at least one line detected in the MRZ. Reading the text from the at least one line of the MRZ may comprise using an OCR technique. Reading the text from the at least one line of the MRZ may comprise splitting the or each line of the MRZ into separated segments and extracting the text from each segment. Each segment may represent a different field of the MRZ for example first name, last name, birth date, etc. of the document.

Problems may be encountered with extracting the information in the MRZ. For example, the information may be blurred or the identity document may be cropped and information may be missing or the technique used to extract the information may introduce errors. Processing the MRZ to extract information therefrom may comprise checking the extracted MRZ information. Checking the extracted MRZ information may comprise using at least some of the information to calculate a check digit and comparing this to a check digit extracted from the MRZ. Checking the extracted MRZ information may comprise using at least some of the information to determine a type of the identity document and comparing the information with an expected format for the identity document.

Processing the MRZ to extract information therefrom may comprise correcting the extracted MRZ information. Correcting the extracted MRZ information may comprise amending the information, calculating a check digit for the amended information, comparing this to a check digit extracted from the MRZ and repeating until the check digits match. Correcting the extracted MRZ information may comprise amending the information to conform to an expected format of the information.

Processing the MRZ to extract information therefrom may further comprise outputting at least some of the extracted MRZ information to a user. The information which may be output may comprise any of country, first name, last name, nationality, document number, date of birth, expiry date, gender.

Analysing the image to detect a location of the identity document in the image may comprise determining a type and country of issue of the document from the MRZ information, using this to ascertain a size of the document and using the size of the document to detect the location of the identity document in the image. Detecting the location of the identity document in the image may be used to determine a whole document region of the image. Detecting the visual inspection zone (VIZ) of the identity document may comprise detecting a photo region of the image, cropping the photo region from the whole document region of the image, and cropping the MRZ of the image from the whole document region of the image to obtain the VIZ of the identity document.

Processing the VIZ to extract information therefrom may comprise reading text from the VIZ. Reading the text from the VIZ may comprise using an OCR technique. Reading the text from the VIZ may comprise splitting the VIZ into segments and extracting the text from each segment. Splitting the VIZ into segments may comprise layout analysis of the VIZ according to an expected layout of the document of the image. Reading the text from the VIZ may comprise searching the VIZ for one or more information labels and using the labels to locate VIZ information associated with the labels.

The information extracted from the VIZ may comprise information that is in the VIZ and in the MRZ. The information extracted from the VIZ may comprise information that is in the VIZ only.

Problems may also be encountered with extracting the information in the VIZ. For example, the information may be blurred or the identity document may be cropped and information may be missing or the technique used to extract the information may introduce errors. Processing the VIZ to extract information therefrom may comprise checking the extracted VIZ information. Checking the extracted VIZ information may comprise using at least some information extracted from the document to determine a type of the identity document and comparing the information with an expected format for the identity document.

Processing the VIZ to extract information therefrom may comprise correcting the extracted VIZ information. Correcting the extracted VIZ information may comprise amending the VIZ information to conform to an expected format of the VIZ information. Correcting the extracted VIZ information may comprise amending the VIZ information to substantially accord with equivalent MRZ information.

Processing the VIZ to extract information therefrom may comprise outputting at least some of the extracted VIZ information to a user. The extracted VIZ information may be output with its associated label or labels.

Determining matching between at least some of the MRZ information and at least some of the VIZ information to produce a match result may comprise detecting value texts for segments of the MRZ information and detecting value texts for segments of the VIZ information and calculating distances between segment value texts.

Determining matching between at least some of the MRZ information and at least some of the VIZ information may comprise choosing a best value for the information from either the MRZ or the VIZ. The match result may be output to a user.

The method may further comprise using the validity score for the identity document to decide if the document is fake or genuine.

The validity score is determined using information extracted from the MRZ and from the VIZ of the identity document, i.e. the validity of the document can be investigated without having to compare information from the document with information from a stored document. The validity of an identity document can therefore be investigated on first encountering the document. For example, for some fake identity documents, the forger may edit information in the VIZ but not edit the equivalent information in the MRZ. The MRZ information will not match the VIZ information and this can be used to decide that the identity document is fake.

The method may further comprise determining a validity score for the identity document using information extracted from the MRZ of the document. Determining the validity score for the identity document using MRZ information may comprise calculating a check digit using the information and determining a match between this and an extracted check digit for the information. Determining the validity score for the identity document using MRZ information may comprise using the MRZ information to determine a type of the identity document and determining a match between an actual format of the MRZ and an expected format of the MRZ. Determining the validity score for the identity document using MRZ information may comprise determining a length of at least one line of the MRZ and determining a match between this and an expected length of the at least one line of the MRZ.

The method may further comprise determining a validity score for the identity document using information extracted from the VIZ of the document. Determining the validity score for the identity document using VIZ information may comprise calculating a check digit using the information and determining a match between this and an extracted check digit for the information. Determining the validity score for the identity document using VIZ information may comprise using an issue date and an expiry date of the document extracted from the VIZ and checking if the issue date is before the expiry date.

The method may further comprise determining a validity score for the identity document by determining a type of the document and a layout of the document and determining a match between this and a layout of a stored document of the same type. The method may further comprise determining a validity score for the identity document by determining a type of the document and obtaining an infra-red security pattern from the image of the document and determining a match between this and an infra-red security pattern of a stored document of the same type. The method may further comprise determining a validity score for the identity document by determining a type of the document and obtaining an ultra violet security pattern from the image of the document and determining a match between this and an ultra violet security pattern of a stored document of the same type.

The method may further comprise using a plurality of validity scores for the identity document to decide if the document is fake or genuine. Using a plurality of validity scores for the identity document to decide if the document is fake or genuine may comprise weighting the validity scores and combining the weighted scores to produce a composite validity score for the identity document. Each of the validity scores may be weighted according to its importance to deciding if the document is fake or genuine. For example, the validity scores may be weighted according to importance in the order validity score from match result between at least some of the MRZ information and at least some of the VIZ information, validity score from match between a calculated check digit and an extracted check digit for MRZ information, validity score from match between a calculated check digit and an extracted check digit for VIZ information, validity score from match between an actual format of the MRZ and an expected format of the MRZ, validity score from match between a layout of the document and a layout of a stored document of the same type, validity score from match between an ultra violet security pattern from the image and an ultra violet security pattern of a stored document of the same type, validity score from match between an infra-red security pattern from the image and an infra-red security pattern of a stored document of the same type, validity score from match between a length of at least one line of the MRZ and an expected length of the at least one line.

The method may further comprise using information extracted from the MRZ and information extracted from the VIZ of the identity document to autofill an information system.

The method may further comprise using information extracted from the MRZ and/or information extracted from the VIZ of the identity document to determine a type of the document and using the document type to determine access to a resource or location.

The method may further comprise using information extracted from the MRZ and/or information extracted from the VIZ of the identity document to determine an issue country of the document and using the issue country to determine access to a resource or location.

According to a second aspect of the invention there is provided an identity document validity investigation computer program, tangibly embodied on a computer readable medium, the computer program including instructions for causing a computer to execute the method of investigating the validity of the identity document according to the first aspect of the invention.

The computer program may be a cross-platform program. The computer program may be used with a Windows^{®} platform. The computer program may be used with a platform for mobile devices.

According to a third aspect of the invention there is provided a system for investigating the validity of an identity document comprising:
(i) an image receiver which acquires the at least one image containing the identity document,
(ii) a processor which:
   analyses the image to detect a machine readable zone of the identity document,
   processes the machine readable zone to extract information therefrom,
   analyses the image to detect a location of the identity document in the image and then detect a visual inspection zone of the identity document,
   processes the visual inspection zone to extract information therefrom,
   determines matching between at least some of the machine readable zone information and at least some of the visual inspection zone information to produce a match result, and
   determines a validity score for the identity document using the match result.

### Description of the Invention

Embodiments of the present invention are herein described, by way of example of only, with reference to the accompanying drawings, in which:
Figure 1 is a schematic representation of a method of investigating the validity of an identity document in accordance with the first aspect of the invention, and
Figure 2 is a schematic representation of a system for investigating the validity of an identity document in accordance with the third aspect of the invention.

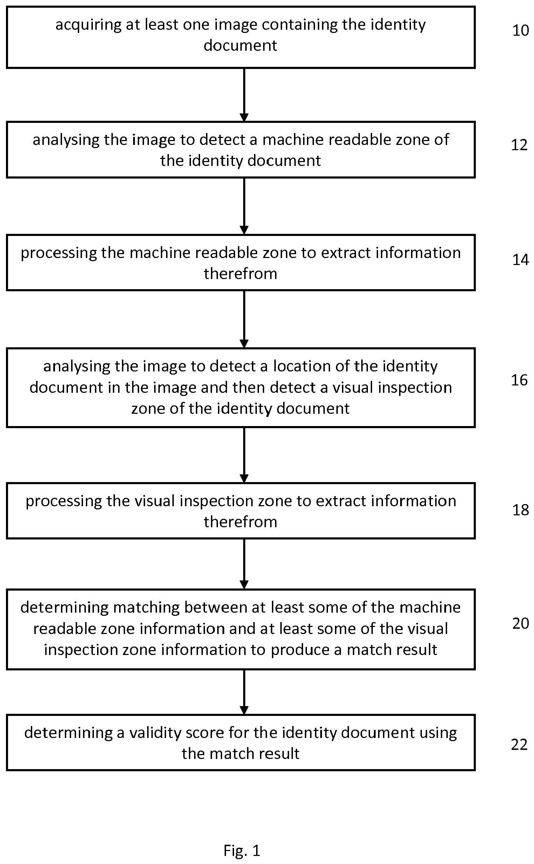

Referring to Figure 1, the method of investigating the validity of an identity document comprises:
(i) acquiring at least one image containing the identity document (10),
(ii) analysing the image to detect a machine readable zone of the identity document (12),
(iii) processing the machine readable zone to extract information therefrom (14),
(iv) analysing the image to detect a location of the identity document in the image and then detect a visual inspection zone of the identity document (16),
(v) processing the visual inspection zone to extract information therefrom (18),
(vi) determining matching between at least some of the machine readable zone information and at least some of the visual inspection zone information to produce a match result (20), and
(vii) determining a validity score for the identity document using the match result (22).

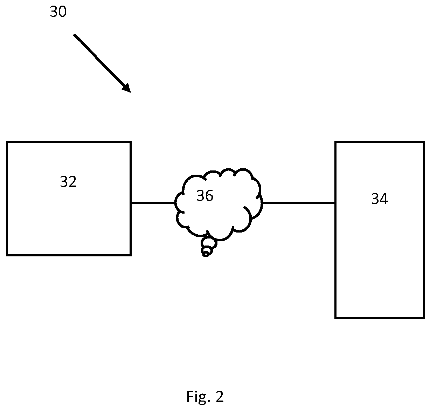

Referring to Figure 2, a system 30 for investigating the validity of an identity document is described. This comprises an image receiver 32 for acquiring the at least one image containing the identity document and a processor 34 for investigating the validity of the identity document.

In this embodiment, the image receiver 32 comprises an image capture device, such as a camera or a scanner. The image receiver 32 is provided at a location of, or accessible to, a user of the system 30. The processor 34 can comprise a processor in a computer. The processor 34 is provided at a location of a provider of the system 30. The locations may be remote from each other and may be wirelessly connected via the Internet 36.

The processor 34 investigates the validity of the identity document by first analysing the image to detect MRZ of the identity document. This comprises detecting a line of the MRZ by searching the image for at least one and preferably three sequential MRZ filler characters. One or more further lines of the MRZ are then detected by searching the image around the first line of the MRZ for at least one and preferably three sequential MRZ filler characters.

Detection of the one or more lines of the MRZ is used to determine a type of the identity document, a height and width of the MRZ, and an orientation of the identity document. The latter is used to reorient the identity document if necessary.

The processor 34 then processes the MRZ to extract information therefrom. This comprises reading text from at least one line detected in the MRZ, using an OCR technique and splitting the or each line into separated segments and extracting the text from each segment. Processing the MRZ further comprises checking the extracted MRZ information. This comprises using at least some of the information to calculate a check digit and comparing this to a check digit extracted from the MRZ and using at least some of the information to determine a type of the identity document and comparing the information with an expected format for the identity document. Processing the MRZ further comprises correcting the extracted MRZ information. This comprises amending the information, calculating a check digit for the amended information, comparing this to a check digit extracted from the MRZ and repeating until the check digits match and amending the information to conform to an expected format of the information.

At least some of the extracted MRZ information is then output to a user. The information comprises country, first name, last name, nationality, document number, date of birth, expiry date, gender from the identity document.

The processor 34 then analyses the image to detect a location of the identity document in the image. This comprises determining a type and country of issue of the document from the MRZ information and using this to ascertain a size of the document. The location of the identity document in the image is used to determine a whole document region of the image. The VIZ of the identity document is detected by detecting a photo region of the image, cropping the photo region from the whole document region of the image, and cropping the MRZ of the image from the whole document region of the image to obtain the VIZ of the identity document.

The processor 34 processes the VIZ to extract information therefrom by reading text from the VIZ, using an OCR technique and splitting the VIZ into segments, by layout analysis, and extracting the text from each segment. The VIZ is searched for one or more information labels and these are used to locate VIZ information associated with the labels. The information extracted from the VIZ comprises information that is in the VIZ and in the MRZ and information that is in the VIZ only. Processing the VIZ also comprises checking the extracted VIZ information using at least some information extracted from the document to determine a type of the identity document and comparing the information with an expected format for the identity document. Processing the VIZ further comprises correcting the extracted VIZ information by amending the VIZ information to conform to an expected format of the VIZ information and amending the VIZ information to substantially accord with equivalent MRZ information.

At least some of the extracted VIZ information with its associated label or labels is then output to a user.

The processor 34 determines matching between at least some of the MRZ information and at least some of the VIZ information to produce a match result. This comprises detecting value texts for segments of the MRZ information and detecting value texts for segments of the VIZ information and calculating distances between segment value texts.

The processor 34 then determines a plurality of other validity scores: by calculating a check digit using MRZ information and determining a match between this and an extracted check digit for the information; by determining a type of the identity document and determining a match between an actual format of the MRZ and an expected format of the MRZ; by determining a length of at least one line of the MRZ and determining a match between this and an expected length of the at least one line of the MRZ; by calculating a check digit using VIZ information and determining a match between this and an extracted check digit for the information; by using an issue date and an expiry date of the document extracted from the VIZ and checking if the issue date is before the expiry date; by determining a type of the document and a layout of the document and determining a match between this and a layout of a stored document of the same type; by determining a type of the document and obtaining an infra-red security pattern from the image of the document and determining a match between this and an infra-red security pattern of a stored document of the same type; by determining a type of the document and obtaining an ultra violet security pattern from the image of the document and determining a match between this and an ultra violet security pattern of a stored document of the same type.

The processor 34 uses the plurality of validity scores for the identity document to decide if the document is fake or genuine, by weighting the validity scores and combining the weighted scores to produce a composite validity score for the identity document. Each of the validity scores is weighted according to its importance to deciding if the document is fake or genuine. The validity scores are weighted according to importance in the order: validity score from match result between at least some of the MRZ information and at least some of the VIZ information; validity score from match between a calculated check digit and an extracted check digit for MRZ information; validity score from match between a calculated check digit and an extracted check digit for VIZ information; validity score from match between an actual format of the MRZ and an expected format of the MRZ; validity score from match between a layout of the document and a layout of a stored document of the same type; validity score from match between an ultra violet security pattern from the image and an ultra violet security pattern of a stored document of the same type; validity score from match between an infra-red security pattern from the image and an infra-red security pattern of a stored document of the same type; validity score from match between a length of at least one line of the MRZ and an expected length of the at least one line.

It will be appreciated that, in other embodiments, not all of the above validity scores may be determined or used in deciding if the identity document is fake or genuine.

In this embodiment, the method and system for investigating the validity of identity documents is used in a bank. A user presents an identity document to a scanner in the bank which acquires at least one image containing the identity document. The processor 34 investigates the validity of the identity document as above. When it has been decided that the identity document is genuine, the processor 34 goes on to use information extracted from the MRZ and/or information extracted from the VIZ of the identity document to determine the issue country of the document. If the issue country and therefore the nationality of the user is acceptable to the bank, the user is allowed to access a bank resource of opening a bank account. The processor 34 uses information extracted from the MRZ and information extracted from the VIZ of the identity document to autofill an information system of the bank and the information is then used in the process of opening the bank account.

In a further embodiment, the method and system for investigating the validity of identity documents is used in an airport. A passenger presents an identity document to a scanner in the airport which acquires at least one image containing the identity document. The processor 34 investigates the validity of the identity document as above. When it has been decided that the identity document is genuine, the processor 34 goes on to use information extracted from the MRZ and/or information extracted from the VIZ of the identity document to determine a type of the document. If the document type is acceptable, the passenger is allowed to proceed.

## Claims

1. A method of investigating the validity of an identity document comprising
(i) acquiring at least one image containing the identity document (10),
(ii) analysing the image to detect a machine readable zone of the identity document (12),
(iii) processing the machine readable zone to extract information therefrom (14),
(iv) analysing the image to detect a location of the identity document in the image and then detecting a visual inspection zone of the identity document (16),
(v) processing the visual inspection zone to extract information therefrom (18),
(vi) determining matching between at least some of the machine readable zone information and at least some of the visual inspection zone information to produce a match result (20), and
(vii) determining a validity score for the identity document using the match result (22).

2. A method according to claim 1 in which analysing the image to detect the machine readable zone (MRZ) of the identity document comprises detecting a first line of the MRZ by searching the image for at least one MRZ filler character.

3. A method according to claim 1 or claim 2 in which analysing the image to detect the MRZ of the image comprises detecting one or more further lines of the MRZ by searching the image around the first line of the MRZ for at least one MRZ filler character.

4. A method according to claim 3 in which searching the image for at least one MRZ filler character comprises searching for a plurality of sequential MRZ filler characters.

5. A method according to any preceding claim in which processing the MRZ to extract information therefrom comprises reading text from at least one line detected in the MRZ which comprises splitting the or each line of the MRZ into separated segments and extracting the text from each segment.

6. A method according to any preceding claim in which analysing the image to detect a location of the identity document in the image comprises determining a type and country of issue of the document from the MRZ information, using this to ascertain a size of the document and using the size of the document to detect the location of the identity document in the image.

7. A method according to claim 6 in which detecting the location of the identity document in the image is used to determine a whole document region of the image.

8. A method according to any preceding claim in which processing the VIZ to extract information therefrom comprises reading text from the VIZ which comprises splitting the VIZ into segments and extracting the text from each segment.

9. A method according to any preceding claim in which determining matching between at least some of the MRZ information and at least some of the VIZ information to produce a match result comprises detecting value texts for segments of the MRZ information and detecting value texts for segments of the VIZ information and calculating distances between segment value texts.

10. A method according to any preceding claim further comprising using the validity score for the identity document to decide if the document is fake or genuine.

11. A method according to any preceding claim further comprising determining a validity score for the identity document using information extracted from the MRZ of the document to determine a type of the identity document and determining a match between an actual format of the MRZ and an expected format of the MRZ.

12. A method according to any preceding claim further comprising determining a validity score for the identity document using information extracted from the VIZ of the document.

13. A method according to any preceding claim further comprising determining a validity score for the identity document by determining a type of the document and a layout of the document and determining a match between this and a layout of a stored document of the same type.

14. An identity document validity investigation computer program, tangibly embodied on a computer readable medium, the computer program including instructions for causing a computer to execute the method of investigating the validity of the identity document according to the first aspect of the invention.

15. A system for investigating the validity of an identity document comprising:
(i) an image receiver (32) which acquires the at least one image containing the identity document,
(ii) a processor (34) which:
analyses the image to detect a machine readable zone of the identity document,
processes the machine readable zone to extract information therefrom,
analyses the image to detect a location of the identity document in the image and then detect a visual inspection zone of the identity document,
processes the visual inspection zone to extract information therefrom,
determines matching between at least some of the machine readable zone information and at least some of the visual inspection zone information to produce a match result,
and
determines a validity score for the identity document using the match result.
